(19) Europäisches Patentamt
European Patent Office
Office européen des brevets

(11) **EP 1 146 361 A1**

(12) **DEMANDE DE BREVET EUROPEEN**

(43) Date de publication:
**17.10.2001 Bulletin 2001/42**

(51) Int Cl.⁷: $G02B\ 6/293$, G02B 6/16

(21) Numéro de dépôt: **01400538.3**

(22) Date de dépôt: **01.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **03.03.2000 FR 0002751**

(71) Demandeur: **ALCATEL**
**75008 Paris (FR)**

(72) Inventeurs:
• **Riant, Isabelle**
**91400 Orsay (FR)**

• **De Barros, Carlos**
**7800 Versailles (FR)**
• **Jurczyszyn, Michel**
**94200 Ivry sur Seine (FR)**
• **Sansonetti, Pierre**
**91120 Palaiseau (FR)**

(74) Mandataire: **Smith, Bradford Lee**
**COMPAGNIE FINANCIERE ALCATEL**
**Dépt. Propr. Industrielle,**
**30, avenue Kléber**
**75116 Paris (FR)**

(54) **Reduction des pertes d'insertion d'un réseau inscrit a couplage de mode dans la gaine**

(57)    L'invention concerne une fibre optique présentant un coeur, une gaine et un réseau inscrit par irradiation couplant au moins un mode de la lumière dans la gaine pour qu'il y soit dissipé. L'invention propose de faire varier progressivement l'indice moyen le long du réseau, au moins aux extrémités du réseau. La variation progressive de l'indice moyen, ou de l'amplitude de modulation d'indice pour l'inscription du réseau permet de limiter les pertes d'insertion du filtre formé par le réseau. Par analogie, l'invention assure dans le cas d'un réseau inscrit l'équivalent d'une variation progressive du coeur de fibre pour le raccordement de deux fibres optiques présentant des diamètres de coeur différents.

L'invention s'applique notamment à des filtres d'égalisation pour les systèmes de transmission à multiplexage en longueur d'onde.

FIG_5

EP 1 146 361 A1

**Description**

L'invention concerne le domaine des filtres optiques, et plus particulièrement des filtres optiques formés de réseaux inscrits dans des fibres optiques. Ces réseaux sont formés dans une fibre par des modulations périodiques, ou sensiblement périodiques de l'indice de la fibre, le long de l'axe longitudinal de la fibre; on appelle "pas" la période de modulation le long de la fibre. De tels réseaux sont couramment formés par irradiation à l'aide d'une lumière ultraviolette d'une fibre dopée pour présenter une photosensibilité.

Pour les systèmes de transmission à multiplexage en longueur d'onde se pose un problème d'égalisation du gain des amplificateurs. De fait, il importe que les amplificateurs disposés à intervalles réguliers dans le système présentent sur toute la plage de longueur d'onde utilisée en transmission une réponse en gain aussi uniforme que possible. Il est connu d'utiliser des filtres pour améliorer la platitude du gain des amplificateurs et assurer l'égalisation du gain sur toute la bande utile.

FR-A-2 779 238, FR-A-2 779 239 et FR-A-2 779 240 décrivent des filtres optiques obtenus par inscription de réseaux dans une fibre optique. Les réseaux proposés dans ces documents présentent une variation d'indice non seulement dans le coeur de la fibre, mais aussi dans la gaine. Par ailleurs, l'inscription dans ces filtres est inclinée par rapport à l'axe longitudinal de la fibre; de la sorte, des modes sont couplés dans la gaine de la fibre où ils sont amortis. Dans ce cas, la forme du filtre est constituée par l'enveloppe des couplages des différents modes dans la gaine de la fibre. Ces filtres sont destinés à être utilisés comme filtres d'égalisation dans des systèmes de transmission à multiplexage en longueur d'onde.

D'autres types de réseaux inscrits et de filtres de Bragg sont par ailleurs connus. L.R. Chen et P.W.E. Smith, Fibre Bragg grating transmission filters with near-ideal filter response, Electronics Letters, vol. 34 no 21, Oct. 98, pp. 2048-2050 propose des filtres moiré présentant un "chirp", c'est-à-dire une variation du pas le long du filtre. Il a encore été proposé de procéder à une apodisation du filtre, c'est-à-dire une variation de l'indice de modulation de la fibre en fonction de la longueur de celle-ci. A titre d'exemple, T.A. Strasser et autres, UV-induced fiber grating OADM devices for efficient bandwidth utilization, OFC'96, PD8-2 à PDB-4 propose un filtre présentant une apodisation gaussienne, c'est-à-dire que l'enveloppe de la fonction de modulation de l'indice de la fibre est une gaussienne. Le filtre ne présente pas de chirp, et le pas de modulation est constant. Dans un tel cas d'apodisation, il est recherché que l'indice moyen reste constant afin d'éviter l'effet appelé sous le terme anglais self-chirp. Le self-chirp est une variation d'indice moyen le long du réseau résultant en une dissymétrisation de la réponse spectrale du filtre.

L'invention concerne le problème nouveau des pertes d'insertion lors de la mise en place dans des systèmes de transmission de tels filtres formés par des réseaux inscrits inclinés. Ce problème est particulièrement important en ce qui concerne les filtres décrits dans les demandes de brevets de la demanderesse visées plus haut, comme expliqué plus bas.

De façon générale, il est connu que le raccordement de deux sections de fibre optique présentant des profils différents peut provoquer des pertes d'insertions. La solution classique à ce problème dans le cas de fibres présentant des diamètres de coeur différents consiste à procéder mécaniquement à un étirage de la fibre présentant le diamètre de coeur le plus important, pour réduire progressivement ce diamètre de coeur. On peut alors raccorder d'une part la fibre présentant le diamètre de coeur le plus faible, et d'autre par la fibre ainsi étirée. Cette solution classique est compliquée à mettre en oeuvre de façon fiable et reproductible.

L'invention propose une solution à ce problème nouveau. Elle assure qu'un filtre formé par un réseau inscrit incliné présente des pertes d'insertion faibles, sans pour autant impliquer comme dans l'état de la technique un étirage de la fibre.

Plus précisément l'invention propose une fibre optique présentant un coeur, une gaine et un réseau inscrit par irradiation couplant au moins un mode de la lumière dans la gaine, caractérisée en ce que l'indice moyen de la fibre varie le long du réseau, au moins aux extrémités du réseau.

Dans un mode de réalisation, le réseau est inscrit dans le coeur de la fibre. Il peut aussi ou alternativement être inscrit dans la gaine de la fibre.

Le réseau est avantageusement un réseau incliné, ou un réseau à longue période.

Dans un mode de réalisation, le réseau présente un pas variable.

De préférence, l'indice moyen varie progressivement aux extrémités du réseau; il peut notamment varier linéairement aux extrémités du réseau.

Dans un mode de réalisation, l'indice moyen varie de sorte que les pertes d'insertion soient inférieures à 0,3 dB.

Avantageusement, l'amplitude de modulation d'indice pour l'inscription du réseau varie à chaque extrémité du réseau, à partir d'une valeur nulle à l'extrémité du réseau.

L'invention propose aussi un filtre d'égalisation de gain formé d'une telle fibre, et un système de transmission, comprenant au moins un filtre d'égalisation de gain formé d'une telle fibre.

D'autres caractéristiques et avantages de l'invention apparaîtront à la lecture de la description qui suit de modes de réalisation donnés à titre d'exemples uniquement, et en référence aux figures qui montrent :

- figures 1 et 2, des graphes de profil d'indice et du profil de photosensibilité d'une fibre de l'état de la technique;

- figure 3, une représentation des variations d'indice induites par l'inscription d'un réseau dans une telle fibre;
- figure 4, une représentation du profil d'indice résultant de l'inscription du réseau dans la fibre des figures 1 à 3;
- figure 5, une représentation schématique de la variation d'indice d'un filtre selon l'invention;
- figure 6, une représentation de la fonction de transfert d'un filtre de l'invention;
- figure 7, une représentation analogue pour un filtre de l'état de la technique.

L'invention s'applique à tout réseau inscrit dans une fibre optique, dans lequel des modes sont couplés dans la gaine pour y être dissipés; un exemple de tels réseaux est donné dans les demandes de brevets précitées, dans lesquelles l'inscription est inclinée, et dans lesquelles on procède aussi à une inscription dans la gaine. La lumière réfléchie est couplée dans la gaine, suivant plusieurs modes. Un autre exemple de tels réseaux est constitué par les réseaux couplant une partie de la lumière incidente dans un mode de gaine à l'avancement. Ces réseaux sont dits à longue période, ou long period gratings en langue anglaise car la période est supérieure de trois ordres de grandeurs à la période des réseaux de Bragg standards. On peut considérer typiquement des périodes de l'ordre de 500 µm au lieu de périodes de l'ordre de 0,5 µm pour les réseaux de Bragg classiques, sans que ces valeurs ne soient limitatives. A.M. Vengsarkar et autres, Long period fiber-grating-based gain equalizers, Optics Letters vol. 21 no. 5 (1996), pages 336-338 donne un exemple de tels réseaux à longue période.

Pour diminuer les pertes d'insertion de tels réseaux dans les systèmes de transmission optique, l'invention propose de contrôler les variations d'indice moyen de la fibre aux extrémités du réseau, c'est-à-dire aux interfaces entre la zone irradiée et la zone non irradiée. Elle propose plus précisément de faire varier progressivement l'indice moyen de la fibre - ou la modulation d'indice utilisée pour l'inscription du réseau - aux extrémités du réseau. Comme expliqué plus bas, cette variation progressive de l'indice aux extrémités du réseau permet une variation progressive du profil d'indice aux extrémités du réseau inscrit, et remplit un rôle équivalent à celui d'une section de fibre obtenue par étirage mécanique et dans laquelle le profil d'indice varie progressivement.

L'invention se distingue d'une apodisation telle qu'elle est décrite dans l'article de T.A. Strasser et autres cité plus haut. Dans un réseau inscrit avec une apodisation, tel que décrit dans ce document, l'apodisation a pour objectif d'améliorer la fonction de transfert du filtre, en supprimant les "pieds" apparaissant sur les bords de la fonction de transfert, de part et d'autre de la longueur d'onde centrale du filtre. Dans une telle configuration, une variation progressive d'indice du type de celle de l'invention n'est pas concevable, car elle aurait pour effet de supprimer les effets de l'apodisation - au moins sur un bord de la fonction de transfert -; il est donc essentiel que l'indice moyen reste constant. A l'inverse, pour les réseaux de l'invention, une variation de l'indice moyen aux extrémités du réseau est sans incidence. Pour les réseaux en angle, des variations d'indice moyen aux extrémités du réseau ont pour effet de rendre dissymétrique la fonction de transfert de chaque mode couplé vers la gaine. Ceci n'a qu'une incidence faible sur la fonction de transfert globale du filtre. Pour les réseaux longue période, les variations d'indice moyen aux extrémités du réseau peuvent induire des modifications de la forme de la fonction de transfert, mais qui restent acceptables.

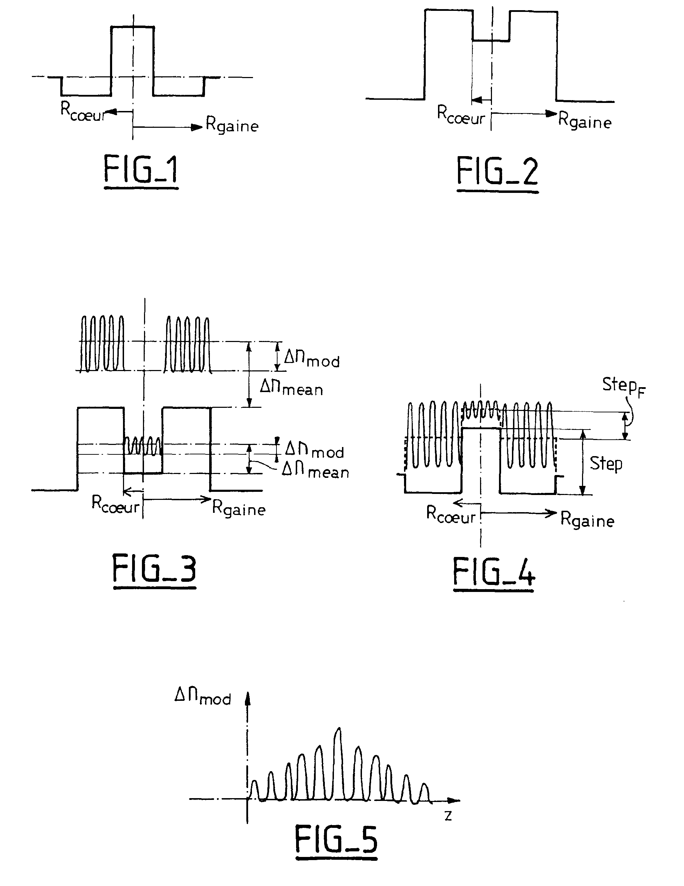

L'invention repose sur le fait que les variations de la photosensibilité dans la fibre dans laquelle le réseau est inscrit induisent lors de l'inscription du réseau des variations de la différence d'indice entre la gaine et le coeur, ou plus généralement des variations du profil d'indice. Ceci est maintenant expliqué en référence à l'exemple fourni dans les demandes de brevet précitées. Les figures 1 et 2 montrent des graphes de profil d'indice et du profil de photosensibilité d'une fibre de l'état de la technique; de façon classique, on a représenté en ordonnée l'indice (ou respectivement la photosensibilité), et en abscisse le rayon compté par rapport au centre de la fibre. La figure 1 montre le profil d'indice de la fibre, en l'absence d'irradiation; il s'agit d'un profil à saut d'indice avec une gaine enterrée; autrement dit, la fibre présente en partant du centre une première zone ou coeur d'indice sensiblement constant et supérieur à l'indice de la gaine extérieure, sur un rayon $R_{coeur}$. Autour de ce coeur, la fibre présente une zone annulaire ou gaine présentant un indice sensiblement constant et inférieur à l'indice de la gaine extérieure; cette zone s'étend entre les rayons $R_{coeur}$ et $R_{gaine}$. Autour de cette zone annulaire s'étend la gaine extérieure de la fibre.

La figure 2 montre une représentation correspondante de la photosensibilité de la fibre. Comme expliqué dans les demandes de brevet précitées, la fibre présente une photosensibilité réduite dans le coeur, pour permettre une plus grande augmentation de l'indice dans la gaine enterrée lors de l'inscription du réseau. La photosensibilité de la fibre est donc plus faible dans la première zone que dans la zone annulaire qui l'entoure.

La figure 3 montre une représentation des variations d'indice induites par l'inscription d'un réseau dans une telle fibre. Pour une irradiation par une lumière d'une intensité donnée, la variation d'indice dans le coeur est plus faible que dans la gaine, du fait que la photosensibilité dans le coeur est plus faible que dans la gaine. On a porté à la figure 3 le profil de photosensibilité, et au-dessus de ce profil, l'intensité de la variation d'indice dans le coeur et dans la gaine. Comme la photosensibilité dans la gaine est plus importante que dans le coeur, les variations d'indice dans la gaine - $\Delta n_{mod}$ sur la figure 3 - sont plus importantes dans la gaine que dans le coeur. La variation moyenne d'indice induite par l'inscription - $\Delta n_{mean}$ sur la figure 3 - est donc plus importante dans la zone de la gaine que dans la zone du coeur.

La figure 4 est une représentation du profil d'indice résultant de l'inscription. Apparaît en trait plein sur la figure le profil d'indice avant inscription, et en trait pointillé le profil d'indice moyen après inscription. Apparaît en traits fins la modulation d'indice du fait de l'inscription. Comme déjà expliqué en référence à la figure 3, l'augmentation d'indice dans le coeur est plus faible que l'augmentation d'indice dans la gaine; il en résulte que la différence d'indice entre la gaine et le coeur avant irradiation - notée Step_i sur la figure - est supérieure à la différence d'indice entre la gaine et le coeur après irradiation - notée Step_F sur la figure. L'invention repose sur la constatation que cette différence d'indice peut être la cause des pertes d'insertion dans un réseau de transmission du filtre formé par le réseau inscrit.

L'effet de l'inscription sur le profil d'indice a été décrit en détail en référence aux figures 1 à 4 dans le cas d'une fibre spécifique, avec une photosensibilité plus importante dans la gaine que dans le coeur. Cet effet se produit aussi dans une fibre qui est simplement photosensible dans le coeur. Dans un tel cas, l'irradiation de la fibre fait augmenter l'indice moyen dans le coeur, de telle sorte que la différence d'indice entre la gaine et le coeur augmente.

Dans tous les cas, l'irradiation d'une fibre présentant des zones de photosensibilité différentes provoque une variation du profil d'indice moyen. Cette variation du profil d'indice moyen peut provoquer des pertes. Ces pertes se rencontrent d'une part lors du passage de la zone non inscrite vers la zone du réseau, et d'autre part lors du passage de la zone du réseau vers la zone inscrite.

L'invention propose une solution à ce problème nouveau. Elle propose de contrôler la variation d'indice, de sorte à limiter les pertes. Pour cela, une solution consiste à faire varier progressivement l'amplitude de la modulation d'indice, au moins aux extrémités du réseau. La variation progressive de l'amplitude de la modulation d'indice inscrite dans le réseau provoque une variation progressive du profil d'indice aux extrémités du réseau. Le caractère progressif de cette variation limite les pertes à l'entrée et à la sortie du réseau.

La figure 5 montre une représentation schématique de la variation d'indice d'un filtre selon l'invention; est portée en abscisse la distance le long de la fibre, et en ordonnée la différence d'indice induite par l'inscription du réseau dans la fibre. Comme le montre la figure, la différence d'indice est nulle ou faible aux extrémités du réseau, et croît progressivement. Dans l'exemple de la figure 5, le réseau est essentiellement constitué d'une première partie dans laquelle l'indice croît, et d'une seconde partie dans laquelle l'indice décroît. Il est entendu que l'on pourrait aussi prévoir entre ces deux parties une troisième partie, avec une amplitude de modulation différente, et par exemple avec une amplitude de modulation constante.

La progression à chaque extrémité du réseau peut être définie de la façon suivante. L'amplitude modulation peut varier de façon linéaire, exponentielle, quadratique, gaussienne ou toute autre progression; elle peut être continue comme dans tous les cas indiqués ci-dessus, ou être discontinue; elle peut être monotone, ou non. La longueur de la progression ou la pente de la variation de l'indice moyen peut qualitativement être obtenue en appliquant les règles connues de l'état de la technique pour le raccordement entre des fibres de diamètre de coeur différent. Snyder et Love, Optical Waveguide Theory, (Chapman & Hall) section 19-3, page 411 propose le critère qualitatif suivant :

$$\frac{4\pi r_{coeur}}{\sqrt{2\Delta(z)}} \frac{V(z)}{W^2(z)} \frac{1}{n^2(z)} \left| \frac{\partial n^2(z)}{\partial(z)} \right| << 1$$

dans laquelle

$$\Delta(z) = \frac{n^2_{coeur} - n^2_{gaine}}{2n^2_{coeur}},$$

avec $n_{coeur}$ l'indice du coeur et $n_{gaine}$ l'indice de la gaine, et U, V, W les paramètres de guidage de la fibre.

$$V = \frac{2\pi}{\lambda} r_{coeur} \cdot \sqrt{n^2_{coeur} - n^2_{gaine}}$$

$$U = \sqrt{V^2 - (1,1428.V - 0,996)^2}$$

$$W = \sqrt{V^2 - U^2}$$

Cette formule s'applique aux fibres à saut d'indice. L'invention s'applique aussi à des fibres présentant un profil plus complexe; dans ce cas, la variation de la modulation aux extrémités du réseau peut être déterminée expérimentalement, par la mesure des pertes dans le réseau. Dans tous les cas, l'invention propose de limiter les variations de l'indice moyen, et donc les pertes correspondantes. Ces pertes sont de préférence inférieures à 0.3 dB.

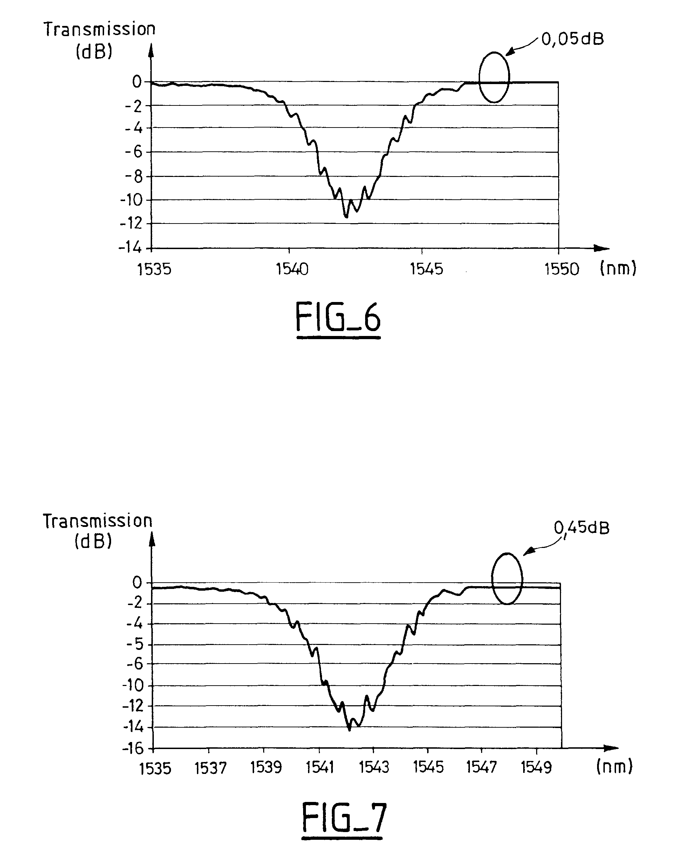

Les figures 6 et 7 montrent les résultats de l'invention. la figure 6 est une représentation de la fonction de transfert d'un filtre de l'invention; la transmission est portée en ordonnée, et la longueur d'onde en abscisse; la fibre utilisée est une décrites dans les demandes de brevets de la demanderesse visées plus hauts, avec un rapport de photosensibilité de 50% entre le coeur et la gaine, et un saut d'indice $\Delta ne$ de $4.10^{-3}$. Le filtre inscrit

est un filtre de Bragg, avec un pas uniforme de 533,5 nm, inscrit sur une longueur de 5 mm. Le réseau est incliné d'un angle de 3° par rapport à l'axe de la fibre. A chaque extrémité du filtre, l'amplitude de modulation varie linéairement entre une valeur nulle et une valeur maximale approchant $10^{-3}$, sur une longueur de 2,5 mm. La figure montre que les pertes d'insertion pour le filtre sont de l'ordre de 0,05 dB. Autrement dit, les pertes induites par le filtre sont très faibles en dehors de la bande dans laquelle le filtre atténue.

La figure 7 montre une représentation correspondante, pour un filtre identique, à cela près qu'il ne présente pas à chaque extrémité de variation de l'amplitude de modulation, ou de l'indice moyen. Les pertes d'insertion de ce filtre sont de l'ordre de 0,45 dB.

L'invention peut être mise en oeuvre à l'aide des dispositifs connus d'irradiation des fibres photosensibles pour réaliser des réseaux inscrits. On utilise dans un tel dispositif un masque de phase, entre la fibre et la source de lumière ultraviolette; on peut réaliser l'invention en faisant varier le temps d'inscription le long du réseau ou en insérant un masque d'amplitude entre le masque de phase et la fibre; l'amplitude de la modulation d'indice diminue alors au voisinage des extrémités du réseau, ce qui permet d'obtenir une fibre selon l'invention.

L'invention s'applique notamment à la réduction des pertes d'insertion pour les filtres des demandes de brevet précitées de la demanderesse, qui sont avantageusement utilisés comme filtres d'égalisation.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux inscrits que ceux qui ont été décrits à titre d'exemple.

**Revendications**

1. Une fibre optique présentant un coeur, une gaine et un réseau inscrit par irradiation couplant au moins un mode de la lumière dans la gaine, **caractérisée en ce que** l'indice moyen de la fibre varie le long du réseau, au moins aux extrémités du réseau.

2. La fibre de la revendication 1, **caractérisée en ce que** le réseau est inscrit dans le coeur de la fibre.

3. La fibre de la revendication 1 ou 2, **caractérisée en ce que** le réseau est inscrit dans la gaine de la fibre.

4. La fibre de la revendication 1, 2 ou 3, **caractérisée en ce que** le réseau est un réseau incliné.

5. La fibre de la revendication 1, 2 ou 3, **caractérisée en ce que** le réseau est un réseau à longue période.

6. La fibre de l'une des revendications 1 à 5, **caractérisée en ce que** le réseau présente un pas variable.

7. La fibre de l'une des revendications 1 à 6, **caractérisée en ce que** l'indice moyen varie progressivement aux extrémités du réseau.

8. La fibre de la revendication 7, **caractérisée en ce que** l'indice moyen varie linéairement aux extrémités du réseau.

9. La fibre de la revendication 7 ou 8, **caractérisée en ce que** l'indice moyen varie de sorte que les pertes d'insertion soient inférieures à 0,3 dB.

10. La fibre de l'une des revendications 1 à 9, **caractérisée en ce que** l'amplitude de modulation d'indice pour l'inscription du réseau varie à chaque extrémité du réseau, à partir d'une valeur nulle à l'extrémité du réseau.

11. Un filtre d'égalisation de gain formé d'une fibre selon l'une des revendications précédentes

12. Un système de transmission, comprenant au moins un filtre d'égalisation de gain formé selon la revendication 11.

FIG_1

FIG_2

FIG_3

FIG_4

FIG_5

FIG_6

FIG_7

Office européen
des brevets

**RAPPORT DE RECHERCHE EUROPEENNE**

Numéro de la demande

EP 01 40 0538

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 893 712 A (SUMITOMO ELECTRIC INDUSTRIES) 27 janvier 1999 (1999-01-27) * page 6, ligne 20 - ligne 44 * * page 7, ligne 21 - ligne 43 * * page 9, ligne 3 - ligne 53 * * figures 7,8,11,18,19,21 * | 1,2,5,7, 8 | G02B6/293 G02B6/16 |
| X | US 5 694 248 A (ERDOGAN TURAN ET AL) 2 décembre 1997 (1997-12-02) * colonne 3, ligne 9 - ligne 22 * * colonne 5, ligne 55 - ligne 67 * * colonne 6, ligne 1 - ligne 16 * * revendication 1; figures 2,3,5 * | 1,6,9 | |
| P,X | US 6 104 852 A (KASHYAP RAMAN) 15 août 2000 (2000-08-15) * figures 5-7,11 * * colonne 6, ligne 20 - ligne 65 * * colonne 7, ligne 1 - ligne 11 * * colonne 8, ligne 20 - ligne 67 * * colonne 9, ligne 1 - ligne 67 * * colonne 10, ligne 59 - ligne 67 * * colonne 11, ligne 1 - ligne 34 * * figures 4-7,11 * | 1,3-5 | |
| A | EP 0 767 391 A (AT & T CORP) 9 avril 1997 (1997-04-09) * page 3, ligne 3 - ligne 17 * * figure 1 * | 1,2,4,5 | |

**DOMAINES TECHNIQUES RECHERCHES (Int.Cl.7)**

G02B

Le présent rapport a été établi pour toutes les revendications

| Lieu de la recherche | Date d'achèvement de la recherche | Examinateur |
|---|---|---|
| LA HAYE | 2 août 2001 | Mathyssek, K |

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 01 40 0538

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-08-2001

| Document brevet cité au rapport de recherche | | Date de publication | Membre(s) de la famille de brevet(s) | | Date de publication |
|---|---|---|---|---|---|
| EP 0893712 | A | 27-01-1999 | JP | 11095033 A | 09-04-1999 |
|  |  |  | US | 6021242 A | 01-02-2000 |
| US 5694248 | A | 02-12-1997 | US | 5363239 A | 08-11-1994 |
|  |  |  | EP | 0668519 A | 23-08-1995 |
|  |  |  | JP | 7261038 A | 13-10-1995 |
|  |  |  | US | 5712715 A | 27-01-1998 |
|  |  |  | DE | 69323707 D | 08-04-1999 |
|  |  |  | DE | 69323707 T | 14-10-1999 |
|  |  |  | EP | 0604039 A | 29-06-1994 |
|  |  |  | EP | 0631158 A | 28-12-1994 |
|  |  |  | JP | 6230208 A | 19-08-1994 |
|  |  |  | US | 5636304 A | 03-06-1997 |
| US 6104852 | A | 15-08-2000 | CA | 2240519 A | 24-07-1997 |
|  |  |  | EP | 0875014 A | 04-11-1998 |
|  |  |  | WO | 9726571 A | 24-07-1997 |
|  |  |  | JP | 2000503414 T | 21-03-2000 |
| EP 0767391 | A | 09-04-1997 | DE | 69609795 D | 21-09-2000 |
|  |  |  | DE | 69609795 T | 28-12-2000 |
|  |  |  | JP | 3136275 B | 19-02-2001 |
|  |  |  | JP | 9145941 A | 06-06-1997 |
|  |  |  | US | 5703978 A | 30-12-1997 |

EPO FORM P0460